# EUROPÄISCHE PATENTSCHRIFT

(11) **EP 2 572 393 B1**
(45) Veröffentlichungstag und Bekanntmachung des Hinweises auf die Patenterteilung: **09.09.2015**
(21) Anmeldenummer: 11720039.4
(22) Anmeldetag: 16.05.2011
(51) Int. Cl.: H01M 10/04, H01M 2/02, H01M 6/46, H01M 10/02, H01M 10/0585

(54) **GALVANISCHE ZELLE**
GALVANIC CELL
CELLULE GALVANIQUE

(30) Priorität: 20.05.2010 DE 102010022217
(43) Veröffentlichungstag der Anmeldung: 27.03.2013
(73) Patentinhaber: Li-Tec Battery GmbH, 01917 Kamenz (DE)
(72) Erfinder: SCHMIDT, Torsten, 06188 Landsberg (DE); STIEBERT, Iris, 01109 Dresden (DE); ZAHN, Christian, 01129 Dresden (DE); BEIER, Stefan, 01623 Lommatzsch (DE); SCHAEFER, Tim, 99768 Harztor (DE); LEGNER, Steffen, 73479 Ellwangen (DE)
(74) Vertreter: JENSEN & SON
(86) Internationale Anmeldenummer: PCT/EP2011/002419
(87) Internationale Veröffentlichungsnummer: WO 2011/144318

(56) Entgegenhaltungen:
- EP-A1- 1 202 371
- EP-A1- 1 744 383
- EP-A1- 2 071 656
- EP-A2- 0 862 230
- DE-A1- 2 104 918
- GB-A- 529 034
- US-A1- 2008 280 178

## Beschreibung

Die vorliegende Erfindung betrifft eine Galvanische Zelle nach dem Oberbegriff von Anspruch 1, sowie eine Anordnung von Galvanischen Zellen.

### Stand der Technik

Es sind galvanische Zellen (insbesondere Batterie- oder Akkumulatorzellen) mit einer Elektroeinheit, einem ersten Rahmenteil und einem zweiten Rahmenteil bekannt, wobei die Elektroeinheit im Bereich von Klemmflächen zwischen dem ersten Rahmenteil und dem zweiten Rahmenteil eingeklemmt ist. Typischerweise, aber nicht zwingend, wird dabei die Elektroeinheit durch einen in eine Umhüllung eingeschweißten Folienstapel oder Folienwickel mit elektrochemisch aktiven Elektrodenfolien, Separatorfolien und Stromsammelfolien gebildet, wobei die Umhüllung einen den umlaufenden, flachen, verschweißten Rand (auch als Siegelnaht bezeichnet) ausbildet, der als umlaufender Steg von den Schmalseiten des Folienstapels oder Folienwickels absteht, und wobei mit den Stromsammelfolien verbundene Ableiter durch die Umhüllung hindurch nach außen ragen. Bei der Montage wird die Elektroeinheit zwischen die Rahmenteile gelegt und die Rahmenteile z.B. verschraubt oder vernietet, sodass dickere Abschnitte der Rahmenteile die Siegelnaht der Elektroeinheit einklemmen. Eine Weichkomponente wie etwa ein Einleger oder dergleichen kann die Zelle durch Reibhaftung fixieren und die mechanische Belastung begrenzen.

Dabei kann es vorkommen, dass die Zelle schief oder verschoben in den Rahmen eingebaut wird. Dadurch können durch Scherkräfte die Ableiter und damit auch die Zelle beschädigt werden. Durch Setzverhalten der Weichkomponente kann es dazu kommen, dass die Zelle im Rahmen verrutscht und so die Umhüllung z.B. durch Reißen beschädigt und/oder die Zelle durch Zugkräfte auf die Ableiter beschädigt wird.

### Kurzfassung der Erfindung

Es ist eine Aufgabe der vorliegenden Erfindung, den Aufbau nach dem Stand der Technik insbesondere (aber nicht nur) im Hinblick auf die vorstehend genannten Gesichtspunkte zu verbessern.

Die Aufgabe wird durch die Merkmale der unabhängigen Ansprüche gelöst. Vorteilhafte Weiterbildungen der Erfindung bilden den Gegenstand der Unteransprüche.

Gemäß einem Gesichtspunkt der Erfindung wird eine galvanische Zelle mit einer Elektroeinheit, einem ersten Rahmenteil und einem zweiten Rahmenteil vorgeschlagen, wobei die Elektroeinheit im Bereich von Klemmflächen zwischen dem ersten Rahmenteil und dem zweiten Rahmenteil eingeklemmt ist, dadurch gekennzeichnet, dass die Elektroenergieeinheit und das erste Rahmenteil zueinander passende Formmerkmale aufweisen, die derart ineinander eingreifen, dass eine Relativlage der Elektroeinheit zu dem ersten Rahmenteil wenigstens in einem Zustand, in welchem der Klemmverbund der Rahmenteile und der Elektroeinheit gelöst ist, wenigstens im Wesentlichen festgelegt ist.

Unter einer galvanischen Zelle kann im Sinne der Erfindung jede Vorrichtung verstanden werden, welche auch zur Abgabe elektrischer Energie ausgelegt und eingerichtet ist. Dabei wird unter einer Elektroeinheit eine in sich baulich abgeschlossene Baueinheit verstanden, welche die elektrischen Eigenschaften der Energiespeicherung und Energieabgabe erfüllt, und unter Rahmenteilen werden Bauelemente verstanden, die zusammen die Elektroeinheit aufnehmen und eine mechanisch stabile Außenkontur der Zelle definieren. Es kann sich bei der Elektroeinheit insbesondere, aber nicht nur, um eine elektrochemische Speicherzelle vom primären oder sekundären Typ (Batterie- oder Akkumulatorzelle), eine Brennstoffzelle oder eine Kondensatorzelle handeln.

Wenn gemäß der Erfindung die Elektroenergieeinheit und das erste Rahmenteil zueinander passende Formmerkmale aufweisen, die derart ineinander eingreifen, dass eine Relativlage der Elektroeinheit zu dem ersten Rahmenteil wenigstens in einem Zustand, in welchem der Klemmverbund der Rahmenteile und der Elektroeinheit gelöst ist, wenigstens im Wesentlichen festgelegt ist, erfolgt beim Einlegen der Elektroenergieeinheit in den Rahmen (das erste Rahmenteil) eine Vorfixierung der Elektroenergieeinheit. Dadurch ist ein schiefer oder verschobener Einbau der Elektroenergieeinheit in den Rahmen nicht mehr möglich. Die Elektroenergieeinheit kann sicher und dauerhaft lagestabil in dem Rahmen eingebaut werden.

Weiter ist vorgesehen, dass die Formmerkmale der Elektroeinheit in einem elektrisch inaktiven Randbereich der Elektroeinheit ausgebildet sind. Wenn die formschlüssige Halterung der Elektroeinheit demnach einem elektrisch inaktiven Randbereich vorbehalten ist, kann ein elektrochemisch aktiver Teil von mechanischen Spannungen frei gehalten werden und können elektrochemische Vorgänge störungsfrei ablaufen.

Schließlich ist vorgesehen, dass die Elektroeinheit einen elektrochemisch aktiven Teil aufweist, der eine im Wesentlichen quaderförmige, insbesondere flache Grundform definiert, aus einem Folienstapel oder einem Folienwickel gebildet ist und von einer folienartigen, isolierenden Umhüllung dicht umschlossen ist, wobei die Umhüllung den Randbereich ausbildet, der vorzugsweise von Schmalseiten der quaderförmigen Grundform abragt. Unter einem elektrochemisch aktiven Teil wird dabei derjenige Teil verstanden, innerhalb dessen Lade-, Entlade- und ggf. Umwandlungsvorgänge elektrischer Energie stattfinden. Der aktive Teil kann Folienschichten aus elektrochemisch aktiven Materialien (Elektroden), leitenden Materialien (Stromsammler) und trennenden Materialien (Separatoren) aufweisen. Unter einer dichten Umhüllung wird im Sinne der Erfindung eine gas-, dampf- und flüssigkeitsdichte Umhüllung verstanden, wobei auch eine Abschirmung gegen elektromagnetische Wellen und Impulse gegeben sein kann. Zusätzlich können Ableiter vorgesehen sein, die mit Stromsammlerbereichen innerhalb des elektrochemisch aktiven Teils verbunden sind, die durch die Hülle hindurch nach außen treten und die insbesondere, aber nicht zwingend, in flächiger Form von der Zelle abragen. Die Erfindung ist somit bevorzugt, aber nicht ausschließlich, auf flache Akkumulatorzellen anwendbar. Ohne Beschränkung der Allgemeinheit wird dabei bevorzugt, dass die Elektrodenmaterialien wenigstens teilweise Lithium oder Lithiumverbindungen aufweisen.

In einer bevorzugten Ausführungsform ist vorgesehen, dass die Formmerkmale der Elektroeinheit Ausnehmungen, die in einem Randbereich der Elektroeinheit ausgebildet sind, aufweisen und die Formmerkmale des ersten Rahmenteils Erhebungen, welche die Ausnehmungen ausfüllen, aufweisen. Auf diese Weise kann ein Eingriff von Formmerkmalen derart, dass eine Relativlage der Elektroeinheit zu dem ersten Rahmenteil wenigstens im Wesentlichen festgelegt ist, wirksam geschaffen werden.

Eine einfach herzustellende Konfiguration kann geschaffen werden, wenn die Erhebungen und die Ausnehmungen einen wenigstens im Wesentlichen kreisförmigen Querschnitt aufweisen, wobei die Ausnehmungen vorzugsweise ein Lochmuster bilden.

Wenn die Erhebungen einstückig an dem jeweiligen Rahmenteil angeformt sind, ist die Anzahl zu montierender Einzelteile besonders gering. Dagegen kann es fertigungstechnische Vorteile haben, wenn die Erhebungen Elemente, vorzugsweise Stifte oder Dorne, sind, die in Aufnahmen in dem jeweiligen Rahmenteil aufgenommen sind und die besonders bevorzugt aus weniger nachgiebigen Material als die Rahmenteile hergestellt sind.

In einer weiteren Ausgestaltung ist vorgesehen, dass die Ausnehmungen randseitige Einkerbungen aufweisen und die Erhebungen eine den Ausnehmungen folgende Form aufweisen. Bei einer solchen Ausgestaltung ist die Montage, insbesondere das Einlegen der Elektroeinheit in das erste Rahmenteil, besonders einfach.

In einer Weiterbildung der Erfindung ist vorgesehen, dass das zweite Rahmenteil Vertiefungen aufweist, welche die Erhebungen des ersten Rahmenteils aufnehmen. Auf diese Weise kann mit den gleichen Formmerkmalen, die zur Ausrichtung der Elektroeinheit an dem ersten Rahmenteil vorgesehen sind, auch die relative Lage des zweiten Rahmenteils festgelegt werden.

In einer weiteren Ausgestaltung der Erfindung ist vorgesehen, dass die Formmerkmale der Elektroeinheit Prägungen aufweisen, die in einem Randbereich der Elektroeinheit ausgebildet sind, und die Formmerkmale des ersten Rahmenteils Erhebungen und/oder Vertiefungen sind, die den Prägungen folgen, wobei vorzugsweise das zweite Rahmenteil Vertiefungen und/oder Erhebungen aufweist, die den Prägungen folgen. Eine solche Ausgestaltung der Formmerkmale ist, besonders auf der Seite der Elektroeinheit, vergleichsweise einfach zu verwirklichen. Ebenso ist die Montage, insbesondere das Einlegen der Elektroeinheit in das erste Rahmenteil, besonders einfach. Die Anzahl der Einzelteile ist gering.

Mit einer Weichkomponente, die zwischen Klemmflächen der Elektroeinheit und der Rahmenteile vorgesehen ist, wobei die Weichkomponente in einem Zustand, in welchem der Klemmverbund der Rahmenteile und der Elektroeinheit hergestellt ist, elastisch zusammengedrückt ist, kann eine elastische Vorspannung und Dämpfung der Elektroeinheit verwirklicht werden. Damit können mechanische Belastungen aufgrund von Schwingungen und Stößen verringert werden.

In einer Weiterbildung der Erfindung ist vorgesehen, dass das erste Rahmenteil und das zweite Rahmenteil lösbar, insbesondere durch Verschrauben, oder unlösbar, insbesondere durch Niete, miteinander verbunden sind, um eine sichere Verbindung zu schaffen.

In einer Ausführungsalternative ist vorgesehen, dass eine federnde Verriegelungsvorrichtung vorgesehen ist, welche bei Zusammenfügen des ersten und zweiten Rahmenteils einschnappt und hierdurch ein Lösen des ersten Rahmenteils von dem zweiten Rahmenteil verhindert, wobei die Verriegelungsvorrichtung vorzugsweise durch wenigstens ein Teil der Formmerkmale, insbesondere durch Erhebungen und Vertiefungen des ersten und zweiten Rahmenteils, verwirklicht ist. Eine solche Ausgestaltung ermöglicht ein Lösen und Wiederverbinden der Rahmenteile, was auch zur Montage- und Wartungsfreundlichkeit beitragen kann.

In einer Weiterbildung der Erfindung ist vorgesehen, dass das erste Rahmenteil und das zweite Rahmenteil durch eine Scharniereinrichtung miteinander verbunden sind. Eine solche Ausgestaltung kann eine Teilezahl weiter verringern. Auch kann eine Lage der Rahmenteile zueinander sicher definiert werden und die Handhabung erleichtert werden.

Nach einem weiteren Gesichtspunkt der Erfindung wird eine Anordnung von Galvanischen Zellen vorgeschlagen, wobei die galvanischen Zellen nach einem der vorstehenden Ansprüche ausgebildet sind.

Die vorstehenden und weitere Merkmale, Aufgaben und Vorteile der vorliegenden Erfindung werden aus der nachstehenden Beschreibung deutlicher ersichtlich werden, die unter Bezugnahme auf die beigefügten Zeichnungen angefertigt wurde.

### Kurzbeschreibung der Zeichnungen

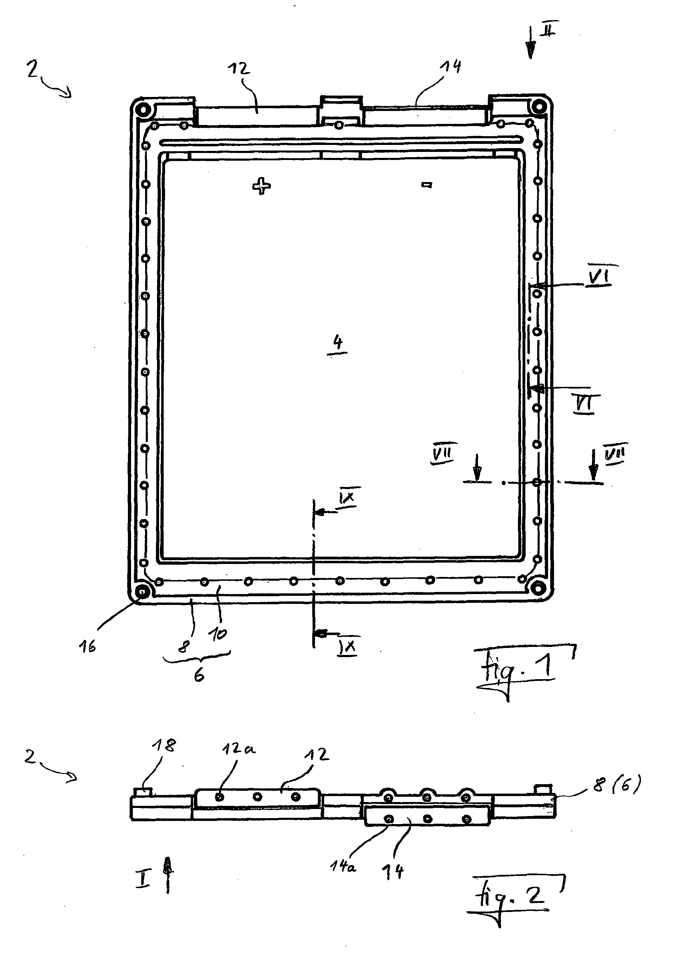

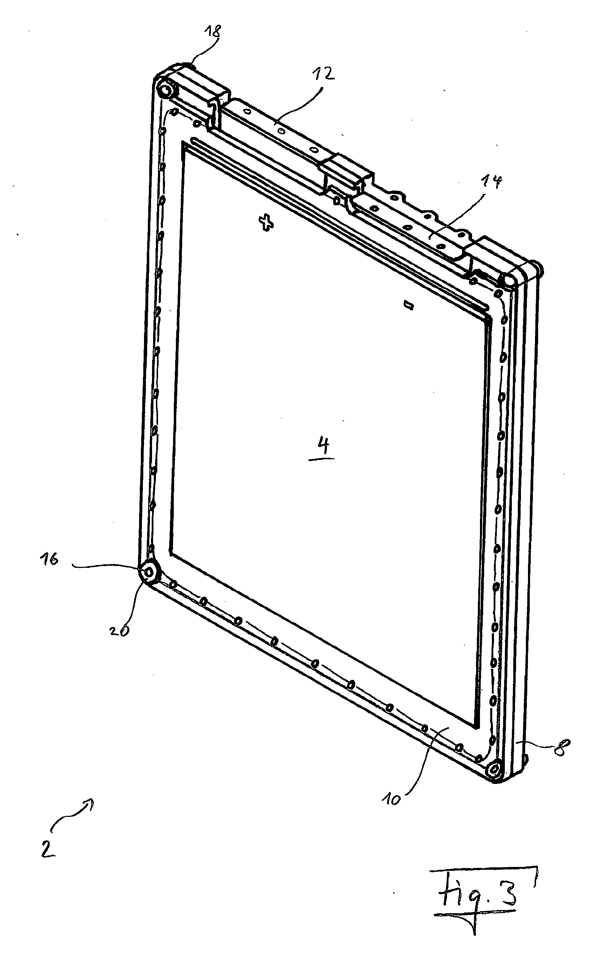

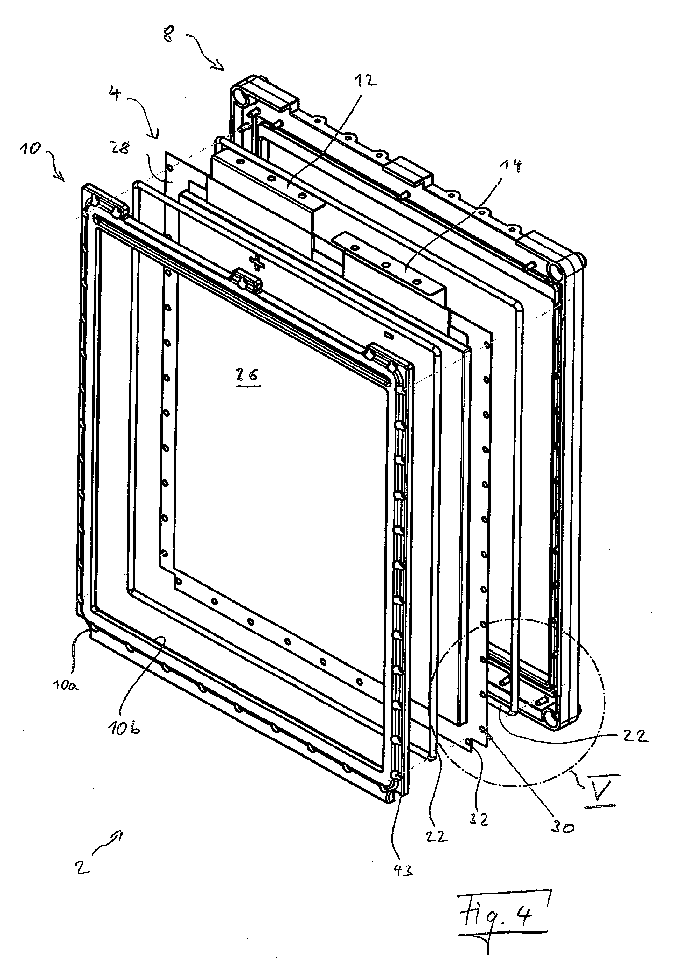

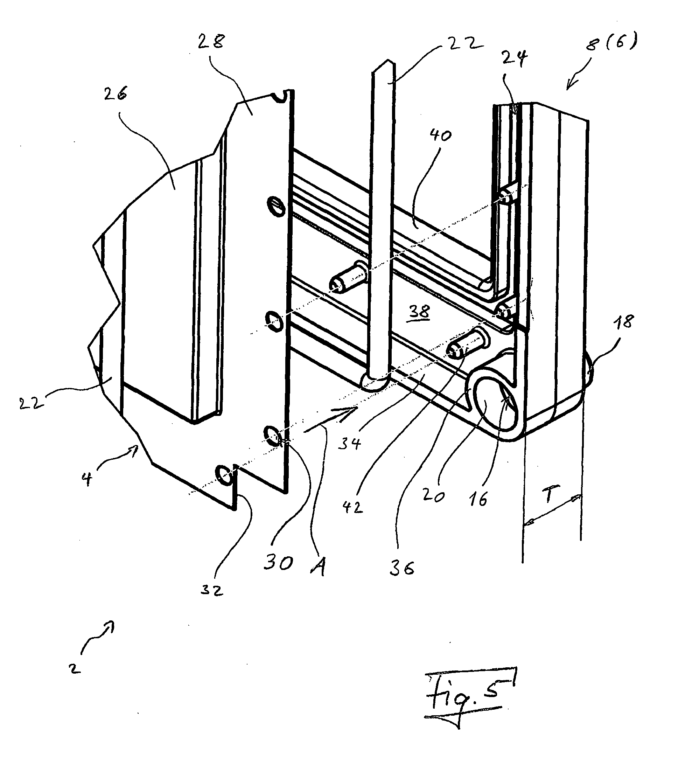

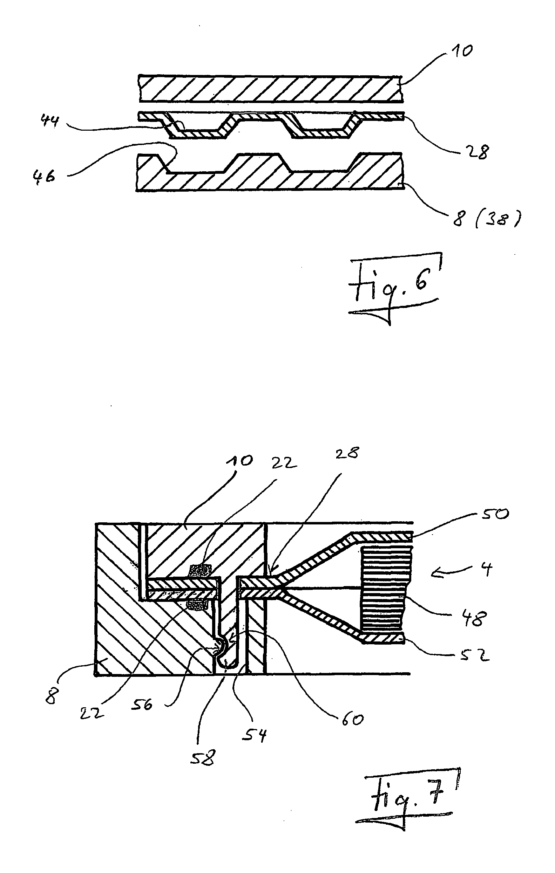

In den Zeichnungen:
- ist Fig. 1: eine stirnseitige Ansicht einer Batteriezelle in einem Ausführungsbeispiel der vorliegenden Erfindung;
- ist Fig. 2: eine Draufsicht der Batteriezelle von Fig. 1;
- ist Fig. 3: eine perspektivische Ansicht der Batteriezelle von Fign. 1 und 2;
- ist Fig. 4: eine Explosionsansicht der Batteriezelle von Fig. 3;
- ist Fig. 5: eine vergrößerte Darstellung einer Einzelheit V in Fig. 4;
- ist Fig. 6: eine geschnittene Detailansicht eines Randbereichs einer Zelle mit zwei Rahmenteilen in einer Ausführungsvariante der vorliegenden Erfindung, wobei der Ausschnitt und die Blickrichtung durch eine Linie und eine Pfeilrichtung VI in Fig. 1 angedeutet ist; und
- ist Fig. 7: eine geschnittene Detailansicht eines seitlichen Abschnitts einer Batteriezelle in einem zweiteiligen Rahmen in einer weiteren Ausführungsvariante der vorliegenden Erfindung, wobei der Ausschnitt und die Blickrichtung durch eine Linie und eine Pfeilrichtung VII in Fig. 1 angedeutet ist.

Es ist darauf hinzuweisen, dass die Darstellungen in den Figuren schematisch sind und sich auf die Wiedergabe der für das Verständnis der Erfindung wichtigsten Merkmale beschränken. Auch ist darauf hinzuweisen, dass die in den Figuren wiedergegebenen Abmessungen und Größenverhältnisse allein der Deutlichkeit der Darstellung geschuldet sind und in keiner Weise einschränkend zu verstehen sind, es sei denn, aus der Beschreibung ergäbe sich etwas anderes.

### Bevorzugte Ausführungsformen der Erfindung

Nachstehend wird eine bevorzugte Ausführungsform der vorliegenden Erfindung und einige Ausführungsvarianten unter Bezugnahme auf die Zeichnungen im Detail beschrieben.

Ein grundlegendes Ausführungsbeispiel einer Batteriezelle der vorliegenden Erfindung wird zunächst anhand der Figuren 1 bis 5 beschrieben. Dabei ist Fig. 1 eine stirnseitige Ansicht, ist Fig. 2 eine Draufsicht, ist Fig. 3 eine perspektivische Ansicht, ist Fig. 4 eine perspektivische Explosionsansicht und ist Fig. 5 eine Detailansicht einer Einzelheit V in Fig. 4. Eine Blickrichtung in Fig. 1 ist durch einen Pfeil I in Fig. 2 angedeutet, und eine Blickrichtung in Fig. 2 ist durch einen Pfeil II in Fig. 1 angedeutet.

Gemäß der Darstellung in Fig. 1 weist eine Batteriezelle 2 ein Batterieelement 4 und einen Rahmen 6 auf, wobei der Rahmen 6 einen Wannenteil 8 und einen Deckelteil 10 aufweist. Dabei ist in Fig. 1 nur ein Rand des Wannenteils 8 sichtbar, und der Deckelteil 10 verdeckt den restlichen Teil des Wannenteils 8 (tatsächlich ist der Deckelteil 10 in seinen Außenabmessungen an den Rand des Wannenteils 8 so angepasst, dass er in diesen einsetzbar ist). An der Oberseite der Batteriezelle 2 liegen ein positiver Ableiter 12 und ein negativer Ableiter 14 des Batterieelements 4 frei zugänglich.

In Fig. 1 ist die Batteriezelle 2 von einer Vorderseite her zu sehen; von dieser Seite gesehen befindet sich der positive Ableiter 12 auf der linken Seite und befindet sich der negative Ableiter 14 auf der rechten Seite.

Gemäß der Darstellung in der Draufsicht von Fig. 2 weisen die Ableiter 12, 14 nach unterschiedlichen Seiten hin ragende Laschen auf, die mit Bohrungen 12a, 14a versehen sind. Dabei weist der positive Ableiter 12 mit seiner Lasche zur Rückseite der Batteriezelle 2, während der negative Ableiter 14 mit seiner Lasche zur Vorderseite der Batteriezelle weist.

In dem Wannenteil 8 des Rahmens 6 sind vier Montagebohrungen 16 (Fig. 1) an den vier Ecken vorgesehen. An der Rückseite der Batteriezelle 2 sind mit den Montagebohrungen 16 fluchtend vier Noppen 18 (Fig. 2) an dem Wannenteil 8 des Rahmens 6 angeformt.

Wie aus der perspektivischen Ansicht der Fig. 3 ersichtlich, sind auf der Vorderseite des Wannenteils 8 mit den Montagebohrungen 16 fluchtende Einsenkungen 20 vorgesehen. Hierzu ist anzumerken, dass eine Einsenktiefe der Einsenkungen 20 größer als die Höhe der Noppen 18 ist, und dass in einem zusammengebauten Zustand mehrerer Batteriezellen 2 die Noppen 18 einer Batteriezelle 2 jeweils in den Einsenkungen 20 einer benachbarten Batteriezelle 2 Platz finden. Auf diese Weise können die Batteriezellen 2 verdrehsicher und verschiebungssicher aneinander gereiht werden. Wenn die erforderliche Anzahl von Batteriezellen 2 aneinander gereiht ist, sind diese mittels langer Schrauben, die sich durch die Montagebohrungen 16 erstrecken, verschraubbar.

Die einzelnen Bestandteile der Batteriezelle 2 sind in der Explosionsansicht von Fig. 4 deutlich erkennbar. Neben dem Batterieelement 4, dem Wannenteil 8 und dem Deckelteil 10 sind zwei Elastomerringe 22 vorgesehen, die jeweils zwischen dem Wannenteil 8 und dem Batterieelement 4 sowie zwischen dem Batterieelement 4 und dem Deckelteil 10 angeordnet sind. Die Elastomerringe 22 sind aus einem elastischen Material hergestellt, weisen eine quadratische Form und einen runden Querschnitt auf.

Gemäß der Darstellung in Fig. 4 weist das Batterieelement 4 einen Mittelteil 26 und einen Randteil 28 auf. Der Randteil 28 ist deutlich dünner als der Mittelteil 26. Bei dem Batterieelement 4 handelt es sich, ohne Beschränkung der Allgemeinheit, um ein Lithium-lonen-Akkumulatorelement flacher Bauart (auch Coffeebag-Zelle oder Pouchzelle genannt). Dabei wird der elektrochemisch aktive Teil des Batterieelements 4 durch eine Schichtung von Folien verschiedener Art gebildet, die in Form eines Stapels oder eines Wickels angeordnet sind. Die Folien umfassen solche mit einem Elektrodenmaterial, das als Anode wirksam ist, solche mit einem Elektrodenmaterial, das als Kathode wirksam ist, elektrisch leitende Stromsammlerfolien für die Anoden- und Kathodenfolien sowie Separatorfolien zur Trennung der verschiedenen Elektrodenbereiche. Die Stromsammlerfolien, die z.B. mit den Kathodenfolien verbunden sind, sind mit dem positiven Stromsammler 12 verbunden, der sich ohne Beschränkung der Allgemeinheit in einer Mittelebene des Folienstapels von diesem weg erstreckt, und die Stromsammlerfolien, die mit den Anodenfolien verbunden sind, sind mit dem negativen Ableiter 14 verbunden, der sich ebenfalls ohne Beschränkung der Allgemeinheit in der Mittelebene des Folienstapels von diesem weg erstreckt. Zwei Hüllfolien fassen den Elektrodenstapel oder Elektrodenwickel ein und sind rings um den Folienstapel beziehungsweise Folienwickel herum verschweißt, um die sogenannte Siegelnaht auszubilden, die hier als Randbereich 28 bezeichnet wird. Die Ableiter 12, 14 erstrecken sich durch die Siegelnaht der beiden Hüllfolien hindurch; dabei ist der Innenbereich der Hüllfolie evakuiert und durch die Hüllfolien im Übrigen hermetisch (gas-, dampf- und flüssigkeitsdicht, ggf. auch elektromagnetisch abgeschirmt) von der Umgebung abgeschlossen.

In dem Randbereich 28 des Batterieelements 4 sind mehrere Löcher 30 in der Form eines wenigstens im Wesentlichen regelmäßigen Lochmusters über die drei Randseiten, in denen die Ableiter 12, 14 nicht angeordnet sind, verteilt. Die Funktion dieser Löcher 30 wird nun anhand der Detailansicht von Fig. 5 näher erläutert. In Fig. 5 sind der Wannenteil 8 des Rahmens 6, das Batterieelement 4 sowie die beiden Elastomerringe 22 im Bereich einer rechten unteren Ecke der Batteriezelle 2 vergrößert dargestellt. Wie in Fig. 5 ersichtlich, verläuft der Elastomerring 22 in einer Nut 24 des Wannenteils 8. Der andere Elastomerring 22 verläuft in einer ähnlich ausgebildeten Nut in dem Deckelteil (10, hier nicht näher dargestellt).

Gemäß der Darstellung in Fig. 5 weist der Wannenteil 8 einen Randsteg 34 auf, dessen Höhe gleichzeitig die Gesamtdicke T des Wannenteils 8 und damit auch des Rahmens 6 insgesamt bestimmt. Der Randsteg 34 erweitert sich an den Ecken zu einem Ringsteg 36, der die Bohrung 16 und die Einsenkung 20 aufnimmt und auf der Rückseite des Wannenteils 18 in den Noppen 18 eine Entsprechung findet. An den Ringsteg 34 schließt sich zur Innenseite hin ein Boden 38, der einerseits die Rückseite des Wannenteils 8 beziehungsweise der Batteriezelle 2 insgesamt definiert und andererseits eine Auflagefläche für den Randbereich 28 des Batterieelements 4 bildet. Noch weiter nach innen hin ist aus dem Boden 38 ein Fenster 40 ausgebildet, welches den dickeren Mittelteil 26 des Batterieelements 4 aufnimmt.

Der Randbereich 28 des Batterieelements 4 weist an seinen unteren Ecken jeweils eine Einkerbung 32 auf, die in etwa dem von dem Ringsteg 36 des Wannenteils 8 des Rahmens 6 eingenommenen Raum entspricht. In dem Boden 38 des Wannenteils 8 des Rahmens 6 sind eine Reihe von Stiften 42 eingesetzt, die in ihrer Anordnung genau dem Bohrungsbild der Löcher 30 in dem Randteil 28 des Batterieelements 4 entsprechen. Wie in Fig. 4 ersichtlich, weist auch der Deckelteil 10 eine Anzahl von Bohrungen 43 auf, deren Bohrungsbild der Anordnung der Stifte 42 in dem Wannenteil 8 entspricht. Ferner weist der Deckelteil 10 an seinen unteren Ecken jeweils Ausformungen 10a auf, deren Kontur der Außenkontur der Rippenstege 36 des Wannenteils 8 entspricht. Schließlich weist der Deckelteil 10 ein Fenster 10b auf, welches der Aufnahme des Mittelteils 26 des Batterieelements 4 dient. Im Übrigen entsprechen die Außenmaße des Deckelteils 10 den Innenmaßen des Randstegs 34 des Wannenteils 8.

Beim Zusammenbau der Batteriezelle 2 wird zunächst der Wannenteil 8 vorbereitet, werden die Stifte 42 in nicht näher dargestellten Bohrungen eingesetzt und wird der eine Elastomerring 22 in die Nut 24 des Wannenteils 8 eingelegt. Dann wird das Batterieelement 4 in das Wannenteil 8 eingesetzt, wobei die Stifte 42 des Wannenteils 8 durch die Löcher 30 des Randbereichs 28 des Batterieelements 4 hindurch treten (ein Pfeil A in Fig. 5 deutet eine Montagerichtung an). Durch die Stifte 42 und die Löcher 30 ist eine Relativlage des Batterieelements 4 zu dem Wannenteil 8 bereits in diesem Zustand wenigstens im Wesentlichen festgelegt, und zwar in jeder denkbaren Raumrichtung mit Ausnahme einer Demontagerichtung (Richtung entgegen dem Pfeil A in Fig. 5). Insbesondere ist die Relativlage des Batterieelements 4 zu dem Wannenteil 8 in jeder Richtung entlang der durch den Boden 38 des Wannenteils 8 gebildeten Auflagefläche wie auch in einer Drehrichtung um eine Achse senkrecht zu dieser Auflagefläche wenigstens im Wesentlichen festgelegt.

Im weiteren Ablauf wird sodann der andere Elastomerring 22 in eine Nut (nicht näher dargestellt) in dem Deckelteil 10 eingesetzt und der Deckelteil 10 in den Wannenteil eingesetzt, wobei nun die Stifte 42 in den Bohrungen 43 des Deckelteils 10 aufgenommen werden. Wie aus Fig. 4 ersichtlich, sind im oberen Bereich des Wannenteils 8 fünf Stifte vorgesehen, die außerhalb der Erstreckung des Randbereichs 28 des Batterieelements 4 liegen, aber in weiteren Bohrungen 43 des Deckelteils 10 jeweils aufgenommen sind. Die Fixierung des Deckelteils 10 an dem Wannenteil 8 erfolgt durch bekannte Befestigungsmittel wie etwa Schrauben (hier nicht näher dargestellt) oder durch eine entsprechende Formgebung des Randstegs 34 des Wannenteils 8 und des Randes des Deckelteils 10, die beispielsweise so ausgebildet sein können, dass der Randsteg 34 einen umlaufenden oder lokal begrenzten, nach innen weisenden Wulst aufweist, der beim Zusammenbau durch den Deckelteil 10 in Montagerichtung überwunden wird, wodurch der Deckelteil 10 in dem Wannenteil 8 einrastet.

Im Sinne der vorliegenden Erfindung ist die Batteriezelle 2 ein Beispiel für eine galvanische Zelle, ist die Batterieeinheit 4 ein Beispiel für eine Elektroeinheit, ist der Wannenteil 8 ein Beispiel für einen ersten Rahmenteil, ist der Deckelteil 10 ein Beispiel für einen zweiten Rahmenteil, und sind die Stifte 42 und Löcher 30 ein Beispiel für zueinander passende Formmerkmale, die derart ineinander eingreifen, dass eine Relativlage der Elektroeinheit zu dem ersten Rahmenteil wenigsten in einem Zustand, in welchem der Klemmverbund der Rahmenteile und der Elektroeinheit gelöst ist, wenigstens im Wesentlichen festgelegt ist. Insbesondere sind im Sinne der Erfindung die Löcher 30 Beispiele für Ausnehmungen, die in einem Randbereich der Elektroeinheit ausgebildet sind, und sind die Stifte 42 Beispiele für Erhebungen, welche die Ausnehmungen ausfüllen. Ferner sind die Elastomerringe 22 Beispiele für eine Weichkomponente im Sinne der Erfindung.

In einer Abwandlung können die Stifte 42 auch durch einstückig angeformte Erhebungen (Noppen) in der Auflagefläche des Wannenteils 8 ersetzt sein, ferner können auch in dem Deckelteil 10 Stifte oder Erhebungen vorgesehen sein, die in entsprechenden Bohrungen oder Vertiefungen des Wannenteils 8 aufgenommen werden und eine Entsprechung im Bohrungsbild der Löcher 30 des Randbereichs 28 des Batterieelements 4 finden.

Fig. 6 zeigt in einer ausschnittweisen Schnittansicht eine Ausbildung von Formmerkmalen einer Batteriezelle nach einer Ausführungsvariante der vorliegenden Erfindung, wobei die Schnittebene parallel zu einer Außenkontur des Mittelteils 26 der Batterieeinheit 4 durch den Randbereich 28 hindurch verläuft. Der Schnittverlauf und die Blickrichtung in Fig. 6 sind in Fig. 1 durch eine strichpunktierte Linie mit Pfeilen VI angedeutet. In der Figur sind ein kurzer Abschnitt des Bodens 38 des Wannenteils 8, ein gegenüberliegender Abschnitt des Deckelteils 10 und ein dazwischen liegender Abschnitt des Randbereichs 28 des Batterieelements 4 gezeigt.

Gemäß der Darstellung in Fig. 6 weist der Randbereich 28 Einprägungen 44 auf, die diesem ein wellenförmiges Muster geben. In dem Boden 38 des Wannenteils sind entsprechende Vertiefungen 46 ausgebildet, die dem Verlauf des geprägten Profils des Randbereichs 28 des Batterieelements 4 genau folgen. Die Innenseite (Klemmfläche) des Deckelteils 10 ist in der dargestellten Ausführungsvariante glatt, kann aber in einer Abwandlung Erhebungen aufweisen, die dem Verlauf des geprägten Profils des Randbereichs 28 des Batterieelements 4 folgen.

In der Figur sind die einzelnen Bauelemente in einem nicht verklemmten Zustand dargestellt. Beim Zusammenbau wird zunächst das Batterieelement 4 so in das Wannenteil 8 eingelegt, dass das Wellenprofil (Einprägungen 44) genau in die Vertiefungen 46 passen. Wenn die Einprägungen 44 wenigstens an zwei aneinander angrenzenden Seiten des Randbereichs 28, also beispielsweise im unteren Randbereich und wenigstens am rechten oder linken Randbereich, ausgebildet sind, ist auch bereits in einem solchen Montagezwischenzustand die Relativlage des Batterieelements 4 zu dem Wannenteil 8 wenigstens im Wesentlichen festgelegt. Im übrigen wird das Wellenprofil vorzugsweise im unteren, linken und rechten Randbereich 28, also insbesondere in denjenigen Randbereichen, in welchen die Ableiter 12, 14 nicht ausgebildet sind, ausgebildet sein.

Bei dieser Ausführungsvariante sind die Einprägungen 44 und die Vertiefungen 46 ein Beispiel für zueinander passende Formmerkmale, die derart ineinander eingreifen, dass eine Relativlage der Elektroeinheit zu dem ersten Rahmenteil wenigsten in einem Zustand, in welchem der Klemmverbund der Rahmenteile und der Elektroeinheit gelöst ist, wenigstens im Wesentlichen festgelegt ist.

Fig. 7 zeigt einen Querschnitt durch den Randbereich und eine kurzen Abschnitt des Mittelteils eines Batterieelements 4 mit den Rahmenteilen 8, 10 im Querschnitt, um eine weitere Ausführungsvariante der vorliegenden Erfindung darzustellen. Der Schnittverlauf und die Blickrichtung in Fig. 7 sind in Fig. 1 durch eine strichpunktierte Linie mit Pfeilen VII angedeutet.

Dargestellt ist auch ein wenigstens im Wesentlichen für die gesamte Anmeldung exemplarischer Aufbau des Batterieelements 4 mit einem Folienstapel 48 und den diesen umhüllenden Hüllfolien 50, 52, die sich außerhalb des Folienstapels 48 zu dem Randbereich 28 vereinigen, dargestellt.

Gemäß der Darstellung in Fig. 7 weist der Wannenteil 8 in dem hier gezeigten Querschnitt eine Durchbrechung 54 in seinem Boden auf. Innerhalb der Durchbrechung 54 steht ein Vorsprung 56 hervor. Der Deckelteil 10 weist eine Nase 58 auf, die sich durch entsprechende Löcher innerhalb des Randbereichs 28 des Batterieelements 4 hindurch in die Durchbrechung 54 des Wannenteils 8 hinein erstreckt. Die Nase 58 ist in gewissem Umfang formbar und weist eine Einkerbung 60 auf, die im Zusammenbau mit dem Vorsprung 56 in der Durchbrechung 54 einschnappt. Dies ist ein Beispiel für eine federnde Verriegelungsvorrichtung im Sinne der vorliegenden Erfindung, welche beim Zusammenfügen des ersten und zweiten Rahmenteils einklappt und hierdurch ein Lösen des ersten Rahmenteils von dem zweiten Rahmenteil verhindert. Diese Verriegelungsvorrichtung ist gleichzeitig durch Formmerkmale, nämlich die Nase 58 und eine hier nicht näher bezeichnete Bohrung innerhalb des Randbereichs 28 des Batterieelements 4, verwirklicht.

Bei dieser Ausführungsvariante sind die Nase 58 mit der Einkerbung 60 und der Vorsprung 56 in dem Durchbruch 54 ein Beispiel für eine federnde Verriegelungsvorrichtung im Sinne der Erfindung. Dabei ist die Nase 58 selbst ein Formmerkmal im Sinne der Erfindung, das mit einem Formmerkmal (einer Bohrung) in dem Randbereich 28 der Batterieeinheit 4 derart ineinander eingreift, dass eine Relativlage der Elektroeinheit zu dem ersten Rahmenteil wenigsten in einem Zustand, in welchem der Klemmverbund der Rahmenteile und der Elektroeinheit gelöst ist, wenigstens im Wesentlichen festgelegt ist.

Selbstverständlich kann die Schnappvorrichtung der Nase auch anders gestaltet sein, wie es dem Fachmann ausgehend von der hier dargestellten technischen Lehre ersichtlich sein wird.

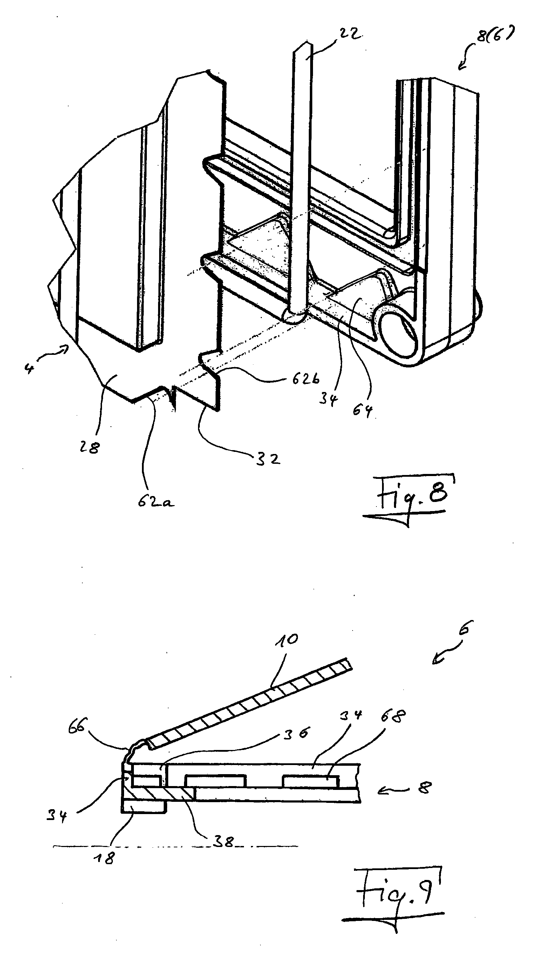

Fig. 8 zeigt in einer perspektivischen Detailansicht, die der Fig. 5 entspricht, eine rechte untere Ecke der Batteriezelle 2 in einer weiteren Ausführungsvariante.

In dieser Ausführungsvariante weist der Randbereich 28 der Batterieeinheit 4 anstelle eines Lochmusters eine Abfolge von keilförmigen Einschnitten oder Einkerbungen 62a (im unteren Randbereich), 62b (im seitlichen Randbereich) auf.

Der Wannenteil 8 des Rahmens 6 weist anstelle von Stiften eine Abfolge von keilförmigen Erhebungen 64 auf, deren Form der Form der Einkerbungen 62a, 62b des Randbereichs 28 der Batterieeinheit 4 entspricht.

Beim Einlegen der Batterieeinheit 4 in den Wannenteil 8 richtet sich die Batterieeinheit 4 mit ihren Einkerbungen 62a, 62b an den Erhebungen 64 des Wanneteils 8 aus und ist somit in allen Raumrichtungen (mit Ausnahme einer Demontagerichtung) festgelegt.

Die Einkerbungen 62a, 62b und Erhebungen 64 sind Formmerkmale im Sinne der Erfindung. Insbesondere sind die Einkerbungen 62a, 62b Ausnehmungen sowie randseitige Einkerbungen im Sinne der Erfindung.

Ohne Beschränkung der Allgemeinheit kann die oberste Reihe der Stifte (42 in Fig. 4), die nicht zum Eingriff mit der Batterieeinheit 4 vorgesehen sind, vorhanden sein, um eine Ausrichtung des Deckelteils 10 zu erleichtern.

Fig. 9 zeigt einen Querschnitt durch einen Randbereich eines Rahmens 6 in einer Batteriezelle (2) in einer weiteren Ausführungsvariante der vorliegenden Erfindung. Der Schnittverlauf und die Blickrichtung in Fig. 9 sind in Fig. 1 durch eine strichpunktierte Linie mit Pfeilen IX angedeutet. In der Figur ist eine Batterieeinheit (4) zur Vereinfachung und Verdeutlichung der Darstellung weggelassen.

Gemäß der Darstellung in Fig. 9 sind bei dieser Ausführungsvariante der Wannenteil 8 und der Deckelteil 10 des Rahmens 6 einteilig ausgeführt, wobei eine Verbindung zwischen den Teilen 8, 10 durch ein Scharnier 66 verwirklicht ist. Das Scharnier 66 ist eine dünne Verbindung, die im oberen Randbereich des Randstegs 34 des Wannenteils 8 ansetzt, und ist über die Länge des Randstegs 34 vorzugsweise mehrfach unterbrochen.

Nach Einlegen einer Batterieeinheit (4, z.B. Fig. 4) und Ausrichtung an Formmerkmalen wie etwa Erhebungen 68, die auf der Seite des Wannenteils 8 ausgebildet sind, wird der Deckelteil 10 an dem Scharnier 66 auf den Wannenteil 8 geklappt und befestigt. Schließlich kann der Deckelteil 10 auf den Erhebungen 68 ruhen.

Das Scharnier 66 ist eine Scharniereinrichtung im Sinne der Erfindung. In einer Abwandlung können die Teile des Rahmens zweiteilig ausgeführt sein und kann die Scharniereinrichtung durch Scharnierbolzen, die in einem des Wannenteils 8 und des Deckelteils 10 angeordnet sind, verwirklicht sein.

Obschon die vorliegende Erfindung vorstehend unter Bezugnahme auf konkrete Ausführungsbeispiele in ihren wesentlichen Merkmalen beschrieben wurde, versteht sich, dass die Erfindung nicht auf diese Ausführungsbeispiele beschränkt ist, sondern in dem durch die Patentansprüche vorgegebenen Umfang und Bereich abgewandelt und erweitert werden kann.

Beispielsweise können die Löcher 30 in dem Randbereich 28 der Elektroeinheit 4 dahin abgewandelt sein, dass sie zum Rand hin offen sind und somit randseitige Einkerbungen ausbilden, die mit entsprechend geformten Erhebungen auf der Seite des Wannenteils 8 zusammen passen.

Die Elastomerringe 20 wurden mit einem runden Querschnitt beschrieben; ihre Ausführung ist jedoch hierauf nicht beschränkt. Der Querschnitt der Elastomerringe 20 kann in Abwandlungen auch pfeilförmig, rechteckig plan, halbrund senkrecht oder dergleichen sein.

Zusätzlich zu den Elastomerringen 20 kann eine weitere Elastomerkomponente, beispielsweise aus einem Schaumstoff, Gummi, Moosgummi oder dergleichen vorgesehen sein, welche den Hauptteil 26 des Batterieelements 4 seitlich gegen den Rahmen 6 abstützt. Als Volumenreserve können hierzu in den Rahmenteilen 8 und/oder 10 entsprechende Aussparungen vorgesehen sein.

### Liste der Bezugszeichen:

- 2: Batteriezelle
- 4: Batterieelement
- 6: Rahmen
- 8: Wannenteil
- 10: Deckelteil
- 12: Positiver Ableiter
- 12a: Bohrung
- 14: Negativer Ableiter
- 14a: Bohrung
- 16: Montagebohrung
- 18: Noppen
- 20: Einsenkung
- 22: Elastomerring
- 24: Nut
- 26: Mittelteil
- 28: Randteil
- 30: Loch
- 32: Einkerbung
- 34: Randsteg
- 36: Ringsteg
- 38: Boden
- 40: Fenster
- 42: Stift
- 43: Bohrung
- 44: Einprägung
- 46: Vertiefung
- 48: Folienstapel
- 50: Hüllfolie
- 52: Hüllfolie
- 54: Durchbrechung
- 56: Vorsprung
- 58: Nase
- 60: Einkerbung
- 62a: Einkerbung
- 62b: Einkerbung
- 64: Erhebung
- 66: Scharnier
- 68: Erhebung
- A: Montagerichtung
- T: Dicke

Es wird ausdrücklich darauf hingewiesen, dass vorstehende Bezugszeichenliste integraler Bestandteil der Beschreibung ist.

## Patentansprüche

1. Galvanische Zelle (2) mit einer Elektroeinheit (4), einem ersten Rahmenteil (8) und einem zweiten Rahmenteil (10), wobei die Elektroeinheit (4) im Bereich von Klemmflächen zwischen dem ersten Rahmenteil (8) und dem zweiten Rahmenteil (10) eingeklemmt ist, **dadurch gekennzeichnet,**
**dass** die Elektroeinheit (4) und das erste Rahmenteil (8) zueinander passende Formmerkmale (30, 32, 36, 42, 44, 46, 62a, 62b, 64) aufweisen, die derart ineinander eingreifen,
**dass** eine Relativlage der Elektroeinheit (4) zu dem ersten Rahmenteil (8) wenigstens in einem Zustand, in welchem der Klemmverbund der Rahmenteile (8, 10) und der Elektroeinheit (4) gelöst ist, wenigstens im Wesentlichen festgelegt ist,
**dass** die Formmerkmale (30, 32, 44, 62a, 62b) der Elektroeinheit (4) in einem elektrisch inaktiven Randbereich (28) der Elektroeinheit (4) ausgebildet sind,
**dass** die Elektroeinheit (4) einen elektrochemisch aktiven Teil (26) aufweist, der eine im Wesentlichen quaderförmige Grundform definiert, aus einem Folienstapel (48) oder einem Folienwickel gebildet ist und von einer folienartigen, isolierenden Umhüllung (50, 52) dicht umschlossen ist, wobei die Umhüllung (50, 52) den Randbereich (28) ausbildet.

2. Galvanische Zelle nach dem vorstehenden Anspruch, **dadurch gekennzeichnet, dass** die Formmerkmale (30, 32, 62a, 62b) der Elektroeinheit (4) Ausnehmungen, die in einem Randbereich (28) der Elektroeinheit (4) ausgebildet sind, aufweisen und die Formmerkmale (36, 42, 64) des ersten Rahmenteils (8) Erhebungen, die die Ausnehmungen ausfüllen, aufweisen.

3. Galvanische Zelle nach Anspruch 2, **dadurch gekennzeichnet, dass** die Erhebungen (42) und die Ausnehmungen (30) einen wenigstens im Wesentlichen kreisförmigen Querschnitt aufweisen, wobei die Ausnehmungen (30) vorzugsweise ein Lochmuster bilden.

4. Galvanische Zelle nach Anspruch 2 oder 3, **dadurch gekennzeichnet, dass** die Erhebungen (42) einstückig an dem jeweiligen Rahmenteil (8) angeformt sind.

5. Galvanische Zelle nach Anspruch 2 oder 3, **dadurch gekennzeichnet, dass** die Erhebungen (42) Elemente, vorzugsweise Stifte oder Dorne, sind, die in Aufnahmen in dem jeweiligen Rahmenteil (8) aufgenommen sind und die besonders bevorzugt aus weniger nachgiebigen Material als die Rahmenteile hergestellt sind.

6. Galvanische Zelle nach Anspruch 2, **dadurch gekennzeichnet, dass** die Ausnehmungen (32, 62a, 62b) randseitige Einkerbungen aufweisen und die Erhebungen (36, 64) eine den Ausnehmungen folgende Form aufweisen.

7. Galvanische Zelle nach einem der Ansprüche 2 bis 6, **dadurch gekennzeichnet, dass** das zweite Rahmenteil (10) Vertiefungen (43) aufweist, welche die Erhebungen (42) des ersten Rahmenteils (8) aufnehmen.

8. Galvanische Zelle nach Anspruch 1, **dadurch gekennzeichnet, dass** die Formmerkmale (44) der Elektroeinheit (4) Prägungen aufweisen, die in einem Randbereich (28) der Elektroeinheit (4) ausgebildet sind, und die Formmerkmale (46) des ersten Rahmenteils (8) Erhebungen und/oder Vertiefungen sind, die den Prägungen folgen, wobei vorzugsweise das zweite Rahmenteil (10) Vertiefungen und/oder Erhebungen aufweist, die den Prägungen folgen.

9. Galvanische Zelle nach einem der vorstehenden Ansprüche, **dadurch gekennzeichnet, dass** eine Weichkomponente (22) zwischen Klemmflächen der Elektroeinheit (4) und der Rahmenteile (8, 10) vorgesehen ist, wobei die Weichkomponente (22) in einem Zustand, in welchem der Klemmverbund der Rahmenteile und der Elektroeinheit hergestellt ist, elastisch zusammengedrückt ist.

10. Galvanische Zelle nach einem der vorstehenden Ansprüche, **dadurch gekennzeichnet, dass** das erste Rahmenteil (8) und das zweite Rahmenteil (10) lösbar, insbesondere durch Verschrauben, oder unlösbar, insbesondere durch Niete, miteinander verbunden sind.

11. Galvanische Zelle nach einem der vorstehenden Ansprüche, **dadurch gekennzeichnet, dass** eine federnde Verriegelungsvorrichtung (54-60) vorgesehen ist, welche bei Zusammenfügen des ersten und zweiten Rahmenteils (8, 10) einschnappt und hierdurch ein Lösen des ersten Rahmenteils von dem zweiten Rahmenteil verhindert, wobei die Verriegelungsvorrichtung vorzugsweise durch wenigstens ein Teil der Formmerkmale, insbesondere durch Erhebungen und Vertiefungen des ersten und zweiten Rahmenteils, verwirklicht ist.

12. Galvanische Zelle nach einem der vorstehenden Ansprüche, **dadurch gekennzeichnet, dass** das erste Rahmenteil (8) und das zweite Rahmenteil (10) durch eine Scharniereinrichtung (66) miteinander verbunden sind.

13. Anordnung von galvanischen Zellen (2), wobei die galvanischen Zellen (2) nach einem der vorstehenden Ansprüche ausgebildet sind.

## Claims

1. Galvanic cell (2) comprising an electric unit (4), a first frame part (8) and a second frame part (10), wherein the electric unit (4) is clamped between the first frame part (8) and the second frame part (10) in the region of clamping surfaces,
**characterised in that**
the electric unit (4) and the first frame part (8) have matching shape features (30, 32, 36, 42, 44, 46, 62a, 62b, 64), which engage with one another in such a way
that a position of the electric unit (4) relative to the first frame part (8) is at least substantially fixed at least in a state in which the clamping connection of the frame parts (8, 10) and the electric unit (4) is released, **in that** the shape features (30, 32, 44, 62a, 62b) of the electric unit (4) are formed in an electrically inactive edge region (28) of the electric unit (4), and
**in that** the electric unit (4) comprises an electrochemically active part (26), which defines a substantially rectangular basic shape, is formed from a foil stack (48) or a foil reel and is tightly enclosed by a foil-type insulating covering (50, 52), the covering (50, 52) forming the edge region (28).

2. Galvanic cell according to the preceding claim, **characterised in that** the shape features (30, 32, 62a, 62b) of the electric unit (4) have recesses formed in an edge region (28) of the electric unit (4) and the shape features (36, 42, 64) of the first frame part (8) have raised areas which fill the recesses.

3. Galvanic cell according to claim 2, **characterised in that** the raised areas (42) and the recesses (30) have an at least substantially circular cross-section, the recesses (30) preferably forming a hole pattern.

4. Galvanic cell according to claim 2 or 3, **characterised in that** the raised areas (42) are integrally formed on the respective frame part (8).

5. Galvanic cell according to claim 2 or 3, **characterised in that** the raised areas (42) are elements, preferably pins or mandrels, which are accommodated in receptacles in the respective frame part (8) and which are particularly preferably made of a material which is less yielding than that of the frame parts.

6. Galvanic cell according to claim 2, **characterised in that** the recesses (32, 62a, 62b) have notches at the edges and the raised areas (36, 64) have a shape matching the recesses.

7. Galvanic cell according to any of claims 2 to 6, **characterised in that** the second frame part (10) has indentations (43) which accommodate the raised areas (42) of the first frame part (8).

8. Galvanic cell according to claim 1, **characterised in that** the shape features (44) of the electric unit (4) include embossings formed in an edge region (28) of the electric unit (4) and the shape features (46) of the first frame part (8) are raised areas and/or indentations matching the embossings, the second frame part (10) preferably having indentations and/or raised areas matching the embossings.

9. Galvanic cell according to any of the preceding claims, **characterised in that** a soft component (22) is provided between the clamping surfaces of the electric unit (4) and the frame parts (8, 10), the soft component (22) being preferably compressed elastically in a state in which the clamping connection of the frame parts and the electric unit is established.

10. Galvanic cell according to any of the preceding claims, **characterised in that** the first frame part (8) and the second frame part (10) are releasably joined to one another, in particular by bolting, or non-releasably joined to one another, in particular by riveting.

11. Galvanic cell according to any of the preceding claims, **characterised in that** a resilient locking device (54-60) is provided, which snaps into place when the first and the second frame part (8, 10) are assembled, thereby preventing a detaching of the first frame part from the second frame part, the locking device being preferably represented by at least a part of the shape features, in particular by raised areas and indentations of the first and second frame parts.

12. Galvanic cell according to any of the preceding claims, **characterised in that** the first frame part (8) and the second frame part (10) are joined to one another by a hinge device (66).

13. Arrangement of galvanic cells (2), the of galvanic cells (2) being designed in accordance with any of the preceding claims.

## Revendications

1. Cellule galvanique (2) dotée d'une unité électrique (4), une première partie de cadre (8) et une seconde partie de cadre (10), l'unité électrique (4) étant serrée dans la zone de faces de serrage entre la première partie de cadre (8) et la seconde partie de cadre (10), **caractérisée en ce que** l'unité électrique (4) et la seconde partie de cadre (8) présentent l'une par rapport à l'autre des caractéristiques de forme adaptées (30, 32, 36, 42, 44, 46, 62a, 62b, 64) qui s'insèrent les unes dans les autres de telle manière qu'une position relative de l'unité électrique (4) par rapport à la première partie de cadre (8) soit au moins sensiblement définie au moins dans un état dans lequel la liaison de serrage des parties de cadre (8, 10) et l'unité électrique (4) soit détachée, **en ce que** les caractéristiques de forme (30, 32, 44, 62a, 62b) de l'unité électrique (4) soient conçues dans une zone de bord inactive électriquement (28) de l'unité électrique (4), **en ce que** l'unité électrique (4) présente une partie active électrochimiquement (26) qui délimite une forme de base essentiellement carrée, formée à partir d'une pile de feuilles (48) ou un enroulement de feuilles et est rendue étanche par une enveloppe (50, 52) stratiforme et isolante, l'enveloppe (50, 52) formant la zone marginale (28).

2. Cellule galvanique selon la revendication précédente, **caractérisée en ce que** les caractéristiques de forme (30, 32, 62a, 62b) de l'unité électrique (4) présentent des évidements qui sont conçus dans une zone marginale (28) de l'unité électrique (4) et les caractéristiques de forme (36, 42, 64) de la première partie de cadre (8) présentent des parties en saillie qui remplissent les évidements.

3. Cellule galvanique selon la revendication 2, **caractérisée en ce que** les parties en saillie (42) et les évidements (30) présentent une section au moins sensiblement annulaire, les évidements (30) formant de préférence un motif à trou.

4. Cellule galvanique selon la revendication 2 ou la revendication 3, **caractérisée en ce que** les parties en saillie (42) sont formées d'un seul tenant sur la partie de cadre (8) respective.

5. Cellule galvanique selon la revendication 2 ou la revendication 3, **caractérisée en ce que** les parties en saillie (42) sont de préférence des goupilles ou des goujons qui sont logés dans des logements dans la partie de cadre (8) respectives et qui sont produits de préférence encore à partir d'un matériau moins souple que les parties de cadre.

6. Cellule galvanique selon la revendication 2, **caractérisée en ce que** les évidements (32, 62a, 62b) présentent sur le bord des dentelures et les parties en saillie (36, 64) présentent une forme suivant les évidements.

7. Cellule galvanique selon l'une quelconque des revendications 2 à 6, **caractérisée en ce que** la seconde partie de cadre (10) présente des enfoncements (43) qui logent les parties en saillie (42) de la première partie de cadre (8).

8. Cellule galvanique selon la revendication 1, **caractérisée en ce que** les caractéristiques de forme (44) de l'unité électrique (4) présentes des gaufrages qui sont conçus dans une zone marginale (2) de l'unité électrique (4) et les caractéristiques de forme (46, 42, 64) de la première partie de cadre (8) présentent des parties en saillie et/ou des évidements qui suivent les gaufrages, de préférence la seconde partie de cadre (10) présente des évidements et/ou des parties en saillie qui suivent les gaufrages.

9. Cellule galvanique selon l'une quelconque des revendications précédentes, **caractérisée en ce qu'**un composant souple (22) est disposé entre les faces de serrage de l'unité électrique (4) et les parties de cadre (8, 10), le composant souple (22) étant comprimé élastiquement dans un état dans lequel la liaison de serrage des parties de cadre et de l'unité électrique est fabriquée.

10. Cellule galvanique selon l'une quelconque des revendications précédentes, **caractérisée en ce que** la première partie de cadre (8) et la seconde partie de cadre (10) sont reliées amovibles en particulier par des vis ou sont reliées ensemble à demeure, en particulier par des rivets.

11. Cellule galvanique selon l'une quelconque des revendications précédentes, **caractérisée en ce qu'**il est prévu un dispositif (54-60) de verrouillage à ressort qui s'encliquète lors de l'assemblage de la première et de la seconde partie de cadre (8, 10) et ainsi rend impossible que la première partie de cadre ne se détache de la seconde partie de cadre, le mécanisme de verrouillage étant réalisé de préférence au moyen d'au moins une partie des caractéristiques de forme, en particulier par des évidements et des parties en saillie de la première et de la seconde partie de cadre.

12. Cellule galvanique selon l'une quelconque des revendications précédentes, **caractérisée en ce que** la première partie de cadre (8) et la seconde partie de cadre (10) sont reliées ensemble par un mécanisme articulé (66).

13. Agencement de cellules galvaniques (2), les cellules galvaniques (2) étant conçues selon l'une quelconque des revendications précédentes.
